# EUROPÄISCHE PATENTSCHRIFT

(11) **EP 2 998 064 B1**
(45) Veröffentlichungstag und Bekanntmachung des Hinweises auf die Patenterteilung: **08.07.2020**
(21) Anmeldenummer: 15184477.6
(22) Anmeldetag: 09.09.2015
(51) Int. Cl.: B23Q 7/04, B27C 9/04, B27M 1/08, B23Q 39/02

(54) **BEARBEITUNGSVORRICHTUNG**
PROCESSING DEVICE
DISPOSITIF DE TRAITEMENT

(30) Priorität: 22.09.2014 DE 102014219070
(43) Veröffentlichungstag der Anmeldung: 23.03.2016
(73) Patentinhaber: HOMAG GmbH, 72296 Schopfloch (DE)
(72) Erfinder: Sturm, Christian, 72172 Sulz am Neckar (DE); Friese, Stefan, 72285 Pfalzgrafenweiler (DE); Schmieder, Volker, 72116 Mössingen (DE)
(74) Vertreter: Grauel, Andreas

(56) Entgegenhaltungen:
- EP-A1- 1 990 150
- EP-A1- 2 025 480
- EP-A2- 1 281 491
- DE-A1- 10 030 997
- DE-C1- 3 734 687
- IT-A1- PC20 110 018

## Beschreibung

### Technisches Gebiet

Die Erfindung betrifft eine Bearbeitungsvorrichtung, insbesondere zum Bearbeiten von Werkstücken aus Holz, Holzwerkstoffen, Kunststoff oder dergleichen, nach dem Oberbegriff von Anspruch 1 (siehe z.B. IT PC20 110 018 A1).

### Stand der Technik

Bearbeitungsvorrichtungen zur Bearbeitung von Werkstücken sind im Stand der Technik vielfach bekannt. Solche Bearbeitungsvorrichtungen weisen üblicherweise ein Vorrichtungsgestell, eine verfahrbare Werkstückhalterung, mittels welcher ein Werkstück verfahrbar gehalten und an einem Werkzeug vorbei fahrbar ist, um das Werkstück zu bearbeiten. Dabei ist an dem Vorrichtungsgestell oder an einem vorgesehenen Portal oder einem Ausleger als Führungsvorrichtung ein Werkzeugschlitten verlagerbar angeordnet, mittels welchem das Werkzeug verlagert werden kann, wobei das Werkstück an dem Werkzeug mittels der verlagerbaren Werkstückhalterung vorbeiführbar ist, um es zu bearbeiten. An dem Vorrichtungsgestell ist üblicherweise eine Werkstückzuführvorrichtung vorgesehen, mittels welchem das Werkstück der verlagerbaren Werkstückhalterung zugeführt und an diese übergeben werden kann. Damit wird das Werkstück üblicherweise vollständig bearbeitet, wobei für die verschiedenen Bearbeitungsschritte aus einem Werkzeugspeicher nacheinander die benötigten Werkzeuge entnommen und in den Werkzeugschlitten eingesetzt werden, um den jeweiligen Bearbeitungsschritt an dem Werkstück vorzunehmen.

Dies bedeutet allerdings, dass unter Umständen eine Vielzahl von Werkzeugen für die unterschiedlichsten Bearbeitungsschritte aus dem Werkzeugspeicher entnommen, in den Werkzeugschlitten eingesetzt, benutzt und wieder zurück zum Werkzeugspeicher geführt werden müssen. Dies kostet relativ viel Zeit für die Bearbeitung, weil der Werkzeugwechsel auch zeitraubend ist, was die Taktfrequenz der Bearbeitung reduziert.

### Darstellung der Erfindung, Aufgabe, Lösung, Vorteile

Es ist die Aufgabe der Erfindung, eine Bearbeitungsvorrichtung zu schaffen, welche eine höhere Taktfrequenz bei der Bearbeitung der Werkstücke erlaubt. Auch ist es die Aufgabe der Erfindung, ein Verfahren zu schaffen, mittels welchem eine effiziente Bearbeitung von Werkstücken erreichbar ist.

Die Aufgabe zur Bearbeitungsvorrichtung wird mit den Merkmalen von Anspruch 1 gelöst.

Ein Ausführungsbeispiel der Erfindung betrifft eine Bearbeitungsvorrichtung, insbesondere zum Bearbeiten von Werkstücken aus Holz, Holzwerkstoffen, Kunststoff oder dergleichen, mit einem Vorrichtungsgestell mit einer, insbesondere feststehenden oder verfahrbaren Werkstückhalterung, mittels welcher ein Werkstück feststehend oder verfahrbar gehalten und an einem Werkzeug vorbeifahrbar ist, um das Werkstück mittels des Werkzeugs zu bearbeiten, mit einer Führungsvorrichtung mit einem an der Führungsvorrichtung feststehenden oder verlagerbar angeordneten Werkzeugschlitten mit zumindest einem daran angeordneten Werkzeug, so dass das Werkzeug feststehend oder verlagerbar angeordnet ist, mit einer verlagerbaren Werkstückzuführvorrichtung, mittels welcher das Werkstück der Werkstückhalterung zuführbar ist, wobei an der Werkstückhalterung, an der Führungsvorrichtung und/oder an der Werkstückzuführvorrichtung zumindest ein Zusatzaggregat zur Bearbeitung des Werkstücks angeordnet ist. Dadurch kann ein Teil der Bearbeitung mit dem Werkzeug erfolgen, welches an dem Werkzeugschlitten anordenbar ist und welches im Durchlauf mit dem Werkstück angefahren wird, wobei ein weiterer Teil der Bearbeitung mittels Zusatzaggregaten vorgenommen werden kann, die nicht an dem Werkzeugschlitten angeordnet sind, um so beispielsweise die Zeit des Wechsels eines Werkzeugs am Werkzeugschlitten oder andere Wegezeiten effektiv für anderweitige Bearbeitungsschritte nutzen zu können. Darüber hinaus müssen weniger Werkzeuge vorgehalten werden, weil der eine oder andere Bearbeitungsschritt durch ein Zusatzaggregat vorgenommen wird. Auch können dadurch Plätze für Werkzeuge an der Führungsvorrichtung eingespart werden bzw. es können dadurch zusätzliche Plätze an der Bearbeitungsvorrichtung geschaffen werden, die für Zusatzaggregate vorgesehen sind.

Dabei sind die Werkstückhalterung und auch das Werkzeug oder die Werkzeuge verlagerbar, um das Werkstück an dem oder an den Werkzeugen vorbeizuführen, um es zu bearbeiten. Dabei bedeutet das Vorbeiführen die Erzeugung einer relativen Bewegung von Werkzeug zu Werkstück, ohne dass es darauf ankommt, ob sich das Werkzeug und/oder das Werkstück bewegt bzw. bewegen.

Dabei ist es gemäß der Erfindung vorteilhaft, wenn eine Auslaufvorrichtung vorgesehen ist, mittels welcher das Werkstück von der Bearbeitungsvorrichtung weg transportiert wird, damit es beispielsweise einer weiteren Verarbeitung oder Bevorratung zugeführt werden kann, wobei an der Auslaufvorrichtung ein Zusatzaggregat angeordnet ist zur Bearbeitung des Werkstücks.

Auch ist es vorteilhaft, wenn zumindest ein Zusatzaggregat an der verlagerbaren Werkstückhalterung angeordnet ist und mit der Werkstückhalterung verlagerbar ist. So kann das Zusatzaggregat auch zum Werkstück verfahren werden, wenn das Werkstück nicht an der Werkstückhalterung angeordnet ist, um an dem Werkstück eine Bearbeitung vorzunehmen.

Auch ist es zweckmäßig, wenn zumindest ein Zusatzaggregat an der verlagerbaren Werkstückzuführvorrichtung angeordnet ist und mit der Werkstückzuführvorrichtung verlagerbar ist. So kann das Zusatzaggregat auch zum Werkstück verfahren werden, wenn das Werkstück nicht an der Werkstückzuführvorrichtung angeordnet ist, um an dem Werkstück eine Bearbeitung vorzunehmen.

Weiterhin ist es vorteilhaft, wenn zumindest ein Zusatzaggregat an dem feststehenden Vorrichtungsgestell und/oder an der feststehenden Führungsvorrichtung oder an der feststehenden Auslaufvorrichtung angeordnet ist. So kann das Werkstück auch zum Zusatzaggregat verfahren werden, wenn das Werkstück an der Werkstückhalterung oder an der Werkstückzuführvorrichtung angeordnet ist, um an dem Werkstück eine Bearbeitung vorzunehmen.

Besonders vorteilhaft ist es, wenn ein Zusatzaggregat ein Bohraggregat, ein Fräsaggregat, ein Sägeaggregat, ein Beschriftungsaggregat, ein Markierungsaggregat, ein Dübelsetzaggregat, ein Hakensetzaggregat und/oder ein Einbringaggregat zum Einbringen von Teilen ist.

Die Aufgabe zum Verfahren wird mit den Merkmalen von Anspruch 5 gelöst.

Auch ist es vorteilhaft, wenn weiterhin eine Auslaufvorrichtung vorgesehen ist, mittels welcher das Werkstück von der Bearbeitungsvorrichtung weg transportiert wird, wobei an der Auslaufvorrichtung ein Zusatzaggregat angeordnet ist, wobei das Werkstück mittels der verlagerbaren Werkstückhalterung oder mit der verlagerbaren Werkstückzuführvorrichtung hin zu dem Zusatzaggregat verfahren wird, um damit das Werkstück zu bearbeiten.

Gemäß des erfindungsgemäßen Gedankens ist es zweckmäßig, wenn ein Zusatzaggregat ein Bohraggregat ist zum Bohren einer Bohrung in das Werkstück oder dass ein Zusatzaggregat ein Fräsaggregat ist zum Fräsen des Werkstücks, oder dass ein Zusatzaggregat ein Sägeaggregat ist zum Erzeugen eines Sägeschnitts, oder dass ein Zusatzaggregat ein Beschriftungsaggregat ist zur Erzeugung einer Beschriftung auf dem Werkstück, oder dass ein Zusatzaggregat ein Markierungsaggregat ist, zur Erzeugung einer Markierung auf dem Werkstück, oder dass das Zusatzaggregat ein Einbringaggregat zum Einbringen von Teilen ist, wie insbesondere ein Dübelsetzaggregat ist, zum Einsetzen eines Dübels in das Werkstück oder ein Hakensetzaggregat ist, zum Einsetzen eines Hakens in das Werkstück.

Weitere vorteilhafte Ausgestaltungen sind durch die nachfolgende Figurenbeschreibung und durch die Unteransprüche beschrieben.

### Kurze Beschreibung der Zeichnungen

Nachstehend wird die Erfindung auf der Grundlage zumindest eines Ausführungsbeispiels anhand der Zeichnungen näher erläutert. Es zeigen:
- Fig. 1: eine schematische Darstellung eines ersten erfindungsgemäßen Ausführungsbeispiels einer erfindungsgemäßen Bearbeitungsvorrichtung,
- Fig. 2: eine schematische Darstellung eines zweiten erfindungsgemäßen Ausführungsbeispiels einer erfindungsgemäßen Bearbeitungsvorrichtung,
- Fig. 3: eine schematische Darstellung eines dritten erfindungsgemäßen Ausführungsbeispiels einer erfindungsgemäßen Bearbeitungsvorrichtung, und
- Fig. 4: eine schematische Darstellung eines vierten erfindungsgemäßen Ausführungsbeispiels einer erfindungsgemäßen Bearbeitungsvorrichtung.

### Bevorzugte Ausführung der Erfindung

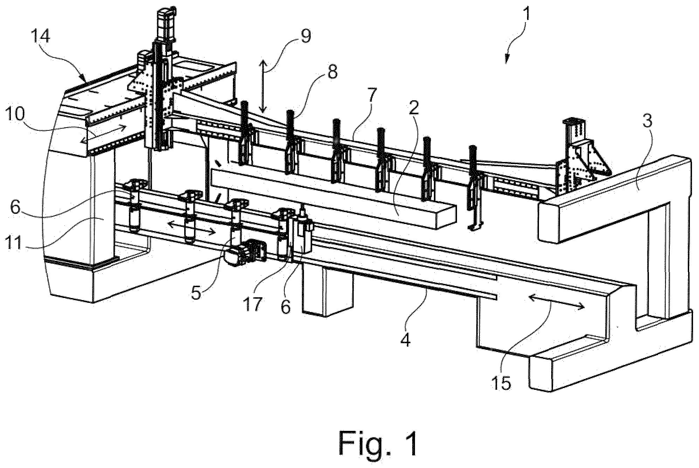

Die Figuren 1 bis 4 zeigen in verschiedenen Ausführungsbeispielen Ausschnitte von Bearbeitungsvorrichtungen zum Bearbeiten von Werkstücken insbesondere aus Holz, Holzwerkstoffen, Kunststoff oder dergleichen, wobei die Bearbeitungsvorrichtung durchaus komplexer sein kann, wobei es in der Darstellung auf die Darstellung der erfindungsgemäßen Elemente ankommt.

Die Figur 1 zeigt eine Bearbeitungsvorrichtung 1, insbesondere zum Bearbeiten von Werkstücken 2 aus Holz, Holzwerkstoffen, Kunststoff oder dergleichen. Die Bearbeitungsvorrichtung 1 weist ein Vorrichtungsgestell 3 mit einer Schiene 4 auf. Entlang der Schiene 4 ist eine verfahrbare Werkstückhalterung 5, wie ein verfahrbarer Bearbeitungstisch, vorgesehen. Die Werkstückhalterung 5 ist mittels Vorschubmitteln entlang der Schiene 4 nach Art eines Schlittens gezielt verfahrbar und auch exakt positionierbar ausgeführt. An der Werkstückhalterung 5 sind Greifmittel 6 vorgesehen, mittels welchen das Werkstück 2 an der Werkstückhalterung 5 festgehalten werden kann. Dabei können die Greifmittel 6 in Form der dargestellten Klemmbacken oder auch anderweitig ausgebildet sein.

An dem Vorrichtungsgestell 3 ist weiterhin eine verlagerbare Werkstückzuführvorrichtung 7, nach Art eines verfahrbaren Manipulators, vorgesehen, mittels welcher Werkstücke beispielsweise von einem Zuführtisch zu der Werkstückhalterung 5 verbracht und zwischen die Greifmittel 6 der Werkstückhalterung 5 gesetzt werden können. Damit kann eine Werkstück 2 in die Werkstückhalterung 5 eingesetzt, dort wieder entnommen und/oder von einer Seite der Werkstückhalterung auch auf eine andere Seite der Werkstückhalterung versetzt werden. Dazu weist die Werkstückzuführvorrichtung 7 Greifmittel 8 auf, mittels welchen das Werkstück 2 gegriffen und gehalten werden kann, während es von der Werkstückzuführvorrichtung 7 verlagert wird. Die Werkstückzuführvorrichtung 7 ist bevorzugt an dem Vorrichtungsgestell 3 in vertikaler Richtung gemäß Pfeil 9 und in lateraler Richtung gemäß Pfeil 10 verlagerbar angeordnet.

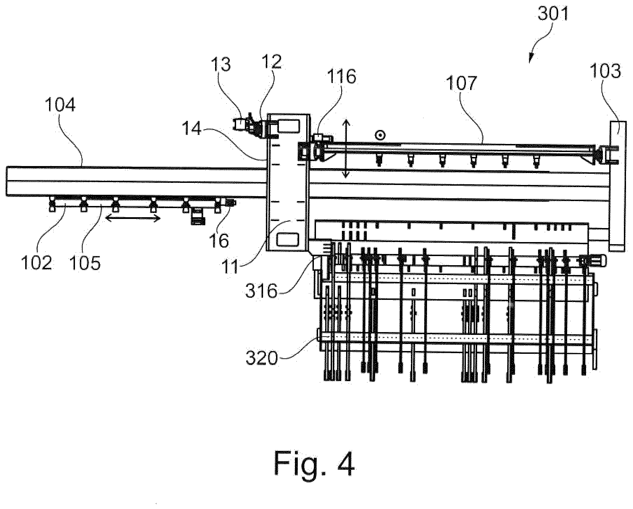

Weiterhin ist eine Führungsvorrichtung 11 nach Art eines Portals oder eines Auslegers vorgesehen, welche bevorzugt mit dem Vorrichtungsgestell 3 verbunden ausgebildet ist oder alternativ auch davon getrennt aufgestellt ausgebildet sein kann. An der Führungsvorrichtung 11 ist verlagerbar zumindest ein Werkzeugschlitten 12, siehe auch Figur 4, angeordnet, welcher zumindest ein Werkzeug 13 tragen kann, um das Werkstück 2 zu bearbeiten. Dazu verfährt das Werkstück 2 mittels der Werkstückhalterung 5 durch die Führungsvorrichtung 11 oder an der Führungsvorrichtung 11 vorbei und das Werkstück 2 wird mit dem Werkzeug 13 insbesondere im Durchlauf bearbeitet. Dabei dient der Werkzeugschlitten 12 dem Verlagern des Werkzeugs 13 an der Führungsvorrichtung 11. Dazu weist die Führungsvorrichtung 11 insbesondere eine Schiene 14 auf, entlang welcher der Werkzeugschlitten 12 in lateraler Richtung parallel zum Pfeil 10 verlagerbar ist. Auf dem Werkzeugschlitten 12 kann ein weiterer Schlitten als Art Kreuzschlitten vorgesehen sein, um das Werkzeug 13 auch in einer Richtung parallel zum Pfeil 9 verlagern zu können.

Zur Bearbeitung des Werkstücks 2 wird dieses in der Werkstückhalterung 5 angeordnet, wobei die Werkstückhalterung entlang der Schiene 4 verlagerbar geführt wird, so dass das Werkstück 2 in Richtung des Pfeils 15 an dem Werkzeug 13 vorbeiführbar ist, um beispielsweise eine Längsseite bearbeiten zu können.

Gemäß des Erfindungsgedankens ist an der Werkstückhalterung 5 ein Zusatzaggregat 16 vorgesehen, welches an einem Endbereich 17 der verlagerbaren Werkstückhalterung 5 befestigt ist. Dadurch ist das Zusatzaggregat 16 mit der Werkstückhalterung 5 in Richtung des Pfeils 15 verlagerbar. Das Zusatzaggregat kann zum Bearbeiten des Werkstücks 2 verwendet werden, wenn das Werkstück in der Werkstückzuführvorrichtung gehalten ist und über die Werkstückhaltevorrichtung 5 verfahren und auf das Zusatzaggregat oder in diese Richtung abgesenkt wird, wie es in Figur 1 gezeigt ist.

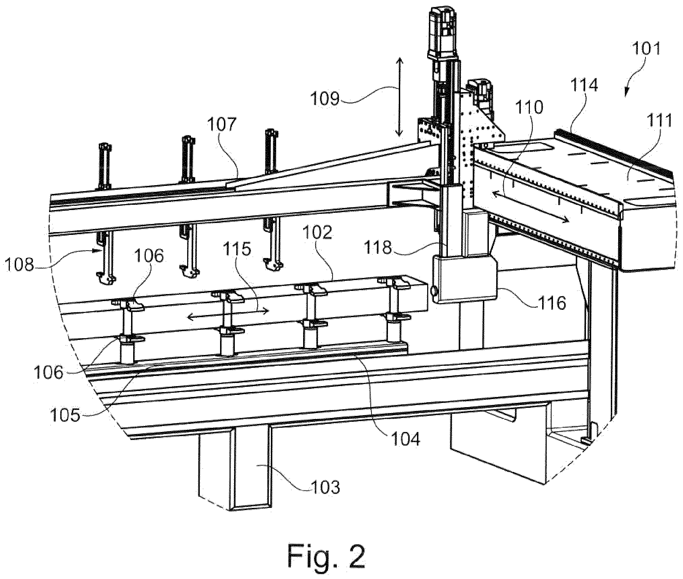

Die Figur 2 zeigt eine Bearbeitungsvorrichtung 101, insbesondere zum Bearbeiten von Werkstücken 102 aus Holz, Holzwerkstoffen, Kunststoff oder dergleichen. Die Bearbeitungsvorrichtung 101 weist ein Vorrichtungsgestell 103 mit einer Schiene 104 auf. Entlang der Schiene 104 ist eine verfahrbare Werkstückhalterung 105, wie ein verfahrbarer Bearbeitungstisch, vorgesehen. Die Werkstückhalterung 105 ist mittels Vorschubmitteln entlang der Schiene 104 nach Art eines Schlittens in Richtung des Pfeils 115 gezielt verfahrbar und auch exakt positionierbar ausgeführt. An der Werkstückhalterung 105 sind Greifmittel 106 vorgesehen, mittels welchen das Werkstück 102 an der Werkstückhalterung 105 festgehalten werden kann. Dabei können die Greifmittel 106 in Form der dargestellten Klemmbacken oder auch anderweitig ausgebildet sein.

An dem Vorrichtungsgestell 103 ist weiterhin eine verlagerbare Werkstückzuführvorrichtung 107, nach Art eines verfahrbaren Manipulators, vorgesehen, mittels welcher Werkstücke beispielsweise von einem Zuführtisch zu der Werkstückhalterung 105 verbracht und zwischen die Greifmittel 6 der Werkstückhalterung 105 gesetzt werden können. Damit kann ein Werkstück 102 in die Werkstückhalterung 105 eingesetzt, dort wieder entnommen und/oder von einer Seite der Werkstückhalterung auch auf eine andere Seite der Werkstückhalterung versetzt werden. Dazu weist die Werkstückzuführvorrichtung 107 Greifmittel 108 auf, mittels welchen das Werkstück 102 gegriffen und gehalten werden kann, während es von der Werkstückzuführvorrichtung 107 verlagert wird. Die Werkstückzuführvorrichtung 107 ist bevorzugt an dem Vorrichtungsgestell 103 in vertikaler Richtung gemäß Pfeil 109 und in lateraler Richtung gemäß Pfeil 110 verlagerbar angeordnet.

Weiterhin ist eine Führungsvorrichtung 111 nach Art eines Portals oder eines Auslegers vorgesehen, welche bevorzugt mit dem Vorrichtungsgestell 103 verbunden ausgebildet ist oder alternativ auch davon getrennt aufgestellt ausgebildet sein kann. An der Führungsvorrichtung 111 ist verlagerbar zumindest ein Werkzeugschlitten 12, siehe auch Figur 4, angeordnet, welcher zumindest ein Werkzeug 13 tragen kann, um das Werkstück 102 zu bearbeiten. Dazu verfährt das Werkstück 102 mittels der Werkstückhalterung 105 durch die Führungsvorrichtung 111 oder an der Führungsvorrichtung 111 vorbei und das Werkstück 102 wird mit dem Werkzeug 13 insbesondere im Durchlauf bearbeitet. Dabei dient der Werkzeugschlitten 12 dem Verlagern des Werkzeugs 13 an der Führungsvorrichtung 111. Dazu weist die Führungsvorrichtung 111 insbesondere eine Schiene 114 auf, entlang welcher der Werkzeugschlitten 12 in lateraler Richtung parallel zum Pfeil 110 verlagerbar ist. Auf dem Werkzeugschlitten 12 kann ein weiterer Schlitten als Art Kreuzschlitten vorgesehen sein, um das Werkzeug 13 auch in einer Richtung parallel zum Pfeil 109 verlagern zu können.

Zur Bearbeitung der Werkstücks 102 wird dieses in der Werkstückhalterung 105 angeordnet, wobei die Werkstückhalterung entlang der Schiene 104 verlagerbar geführt wird, so dass das Werkstück 102 in Richtung des Pfeils 115 an dem Werkzeug 13 vorbeiführbar ist, um beispielsweise eine Längsseite bearbeiten zu können.

Gemäß des Erfindungsgedankens ist an der Werkstückzuführvorrichtung 107 ein Zusatzaggregat 116 vorgesehen, welches an einem Endbereich 117 eines Arms 118 der verlagerbaren Werkstückzuführvorrichtung 107 befestigt ist. Dadurch ist das Zusatzaggregat 116 mit der Werkstückzuführvorrichtung 107 in Richtung der Pfeile 109, 110 verlagerbar. Das Zusatzaggregat 116 kann zum Bearbeiten des Werkstücks 102 verwendet werden, wenn das Werkstück in der Werkstückhalterung 105 gehalten ist und an die Werkstückzuführvorrichtung 107 verfahren und an das Zusatzaggregat 116 oder in diese Richtung verfahren wird, wie es in Figur 2 gezeigt ist.

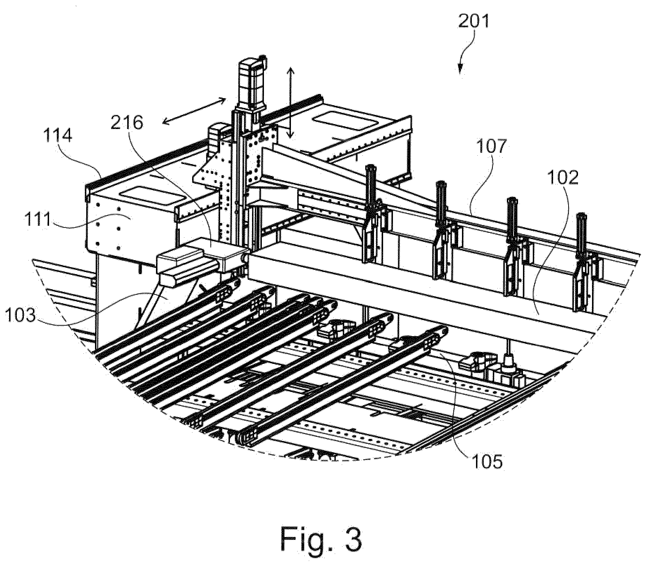

Die Figur 3 zeigt ein weiteres Ausführungsbeispiel einer erfindungsgemäßen Bearbeitungsvorrichtung 201. Gemäß des Erfindungsgedankens ist an dem Vorrichtungsgestell 103 und/oder an der Führungsvorrichtung 111 ein Zusatzaggregat 216 vorgesehen und befestigt. Dadurch ist das Zusatzaggregat 216 lagefest angeordnet. Das Zusatzaggregat 216 kann zum Bearbeiten des Werkstücks 102 verwendet werden, wenn das Werkstück 102 in der Werkstückhalterung 105 oder in der Werkstückzuführvorrichtung 107 gehalten ist und an das Zusatzaggregat oder in diese Richtung verfahren wird, wie es in Figur 3 gezeigt ist.

Die Figur 4 zeigt ein weiteres Ausführungsbeispiel einer erfindungsgemäßen Bearbeitungsvorrichtung 301, wobei weiterhin eine Einlauf- und/oder Auslaufvorrichtung 320 vorgesehen ist, mittels welcher das Werkstück an die Bearbeitungsvorrichtung 301 oder von der Bearbeitungsvorrichtung 301 weg transportiert wird, wobei an der Einlauf- und/oder Auslaufvorrichtung ein Zusatzaggregat 316 angeordnet ist. Dadurch ist das Zusatzaggregat 316 lagefest angeordnet. Das Zusatzaggregat 316 kann zum Bearbeiten des Werkstücks 102 verwendet werden, wenn das Werkstück 102 in der Werkstückhalterung 105 oder in der Werkstückzuführvorrichtung 107 gehalten ist und an das Zusatzaggregat 316 oder in diese Richtung verfahren wird, wie es in Figur 4 gezeigt ist.

Zumindest ein Zusatzaggregat 16, 116, 216, 316 kann somit an dem Vorrichtungsgestell, an der Werkstückhalterung, an der Führungsvorrichtung und/oder an der Werkstückzuführvorrichtung und/oder an einer Einlauf- und/oder Auslaufvorrichtung angeordnet sein.

Ein Zusatzaggregat 16, 116, 216, 316 ist beispielsweise ein Bohraggregat, ein Fräsaggregat, ein Sägeaggregat, ein Beschriftungsaggregat, ein Markierungsaggregat, ein Dübelsetzaggregat, ein Hakensetzaggregat und/oder ein Einbringaggregat zum Einbringen von Teilen.

Mit der oben beschriebenen Vorrichtung kann ein Verfahren durchgeführt werden, zur Bearbeitung von Werkstücken insbesondere aus Holz, Holzwerkstoffen, Kunststoff oder dergleichen. Dabei ist die Bearbeitungsvorrichtung mit einem Vorrichtungsgestell mit einer verfahrbaren Werkstückhalterung ausgebildet, mittels welcher ein Werkstück verfahren werden kann und an einem Werkzeug vorbeigeführt werden kann, um das Werkstück mittels des Werkzeugs zu bearbeiten. Weiterhin ist die Bearbeitungsvorrichtung mit einer Führungsvorrichtung mit einem an der Führungsvorrichtung verlagerbar angeordneten Werkzeugschlitten mit zumindest einem daran angeordneten Werkzeug versehen, so dass das Werkzeug verlagert werden kann. Auch ist die Bearbeitungsvorrichtung mit einer verlagerbaren Werkstückzuführvorrichtung versehen, mittels welcher das Werkstück der verlagerbaren Werkstückhalterung zugeführt werden kann, wobei an dem Vorrichtungsgestell, an der Werkstückhalterung, an der Führungsvorrichtung und/oder an der Werkstückzuführvorrichtung zumindest ein Zusatzaggregat zur Bearbeitung des Werkstücks angeordnet ist.

Dabei wird das Werkstück mittels der verlagerbaren Werkstückhalterung oder mit der verlagerbaren Werkstückzuführvorrichtung hin zu einem der Zusatzaggregate verfahren, um damit das Werkstück zu bearbeiten. Alternativ kann das Werkstück in der Werkstückhalterung oder in der Werkstückzuführvorrichtung gehalten sein und entsprechend die Werkstückzuführvorrichtung oder die Werkstückhalterung mit dem entsprechenden Zusatzaggregat zu dem Werkstück verfahren werden, um das Werkstück zu bearbeiten.

Dabei kann auch weiterhin eine Einlauf- und/oder Auslaufvorrichtung 320 vorgesehen sein, mittels welcher das Werkstück 102 von der Bearbeitungsvorrichtung 301 weg transportiert wird, wobei an der Einlauf- und/oder Auslaufvorrichtung ein Zusatzaggregat 316 angeordnet ist, wobei das Werkstück 102 mittels der verlagerbaren Werkstückhalterung 105 oder mit der verlagerbaren Werkstückzuführvorrichtung 107 hin zu dem Zusatzaggregat 316 verfahren wird, um damit das Werkstück 102 zu bearbeiten.

Das Zusatzaggregat ist bevorzugt ein Bohraggregat zum Bohren einer Bohrung in das Werkstück oder ein Fräsaggregat zum Fräsen des Werkstücks oder ein Sägeaggregat zum Erzeugen eines Sägeschnitts oder ein Beschriftungsaggregat zur Erzeugung einer Beschriftung auf dem Werkstück oder ein Markierungsaggregat zur Erzeugung einer Markierung auf dem Werkstück, oder ein Einbringaggregat zum Einbringen von Teilen, wie insbesondere ein Dübelsetzaggregat zum Einsetzen eines Dübels in das Werkstück oder ein Hakensetzaggregat zum Einsetzen eines Hakens in das Werkstück.

Die in den jeweiligen Figuren gezeigten Zusatzaggregate sind an einer erfindungsgemäßen Bearbeitungsvorrichtung beliebig kombinierbar anordenbar und einsetzbar.

Dabei sind die Werkstückhalterung gemäß der Ausführungsbeispiele und auch das Werkzeug oder die Werkzeuge verlagerbar, um das Werkstück an dem oder an den Werkzeugen vorbeizuführen, um es zu bearbeiten. Dabei kann die Verlagerbarkeit der Werkstückhalterung linear entlang einer Achse verlagerbar ausgerichtet sein oder auch in einer Ebene entlang zweier in einem Winkel zueinander angeordneter Achsen ausgerichtet sein. Auch kann das Werkstück alternativ in einem Raum verlagerbar sein. Dabei kann die Verlagerbarkeit entlang dreier Achsen ausgerichtet sein, die jeweils in einem Winkel zueinander angeordnet sind. Dabei kann die Verlagerbarkeit des Werkzeugs linear entlang einer Achse verlagerbar ausgerichtet sein oder auch in einer Ebene entlang zweier in einem Winkel zueinander angeordneter Achsen ausgerichtet sein. Auch kann das Werkzeug alternativ in einem Raum verlagerbar sein. Dabei kann die Verlagerbarkeit entlang dreier Achsen ausgerichtet sein, die jeweils in einem Winkel zueinander angeordnet sind.

Dabei bedeutet das Vorbeiführen die Erzeugung einer relativen Bewegung von Werkzeug zu Werkstück, ohne dass es darauf ankommt, ob sich das Werkzeug und/oder das Werkstück bewegt bzw. bewegen.

Unter der Verlagerung eines Elements der Bearbeitungsvorrichtung ist auch ein so genannter Vorlegehub bzw. eine Bereitstellungsbewegung zu verstehen, der bzw. die vor deren Benutzung für die Bearbeitung des Werkstücks durchgeführt bzw. vorgenommen werden kann.

### Bezugszeichenliste

- 1: Bearbeitungsvorrichtung
- 2: Werkstück
- 3: Vorrichtungsgestell
- 4: Schiene
- 5: Werkstückhalterung
- 6: Greifmittel
- 7: Werkstückzuführvorrichtung
- 8: Greifmittel
- 9: Pfeil
- 10: Pfeil
- 11: Führungsvorrichtung
- 12: Werkzeugschlitten
- 13: Werkzeug
- 14: Schiene
- 15: Pfeil
- 16: Zusatzaggregat
- 17: Endbereich
- 101: Bearbeitungsvorrichtung
- 102: Werkstück
- 103: Vorrichtungsgestell
- 104: Schiene
- 105: Werkstückhalterung
- 106: Greifmittel
- 107: Werkstückzuführvorrichtung
- 108: Greifmittel
- 109: Pfeil
- 110: Pfeil
- 111: Führungsvorrichtung
- 114: Schiene
- 115: Pfeil
- 116: Zusatzaggregat
- 117: Endbereich
- 118: Arm
- 201: Bearbeitungsvorrichtung
- 216: Zusatzaggregat
- 301: Bearbeitungsvorrichtung
- 316: Zusatzaggregat
- 320: Einlauf- und Auslaufvorrichtung

## Patentansprüche

1. Bearbeitungsvorrichtung (1,101,201,301), insbesondere zum Bearbeiten von Werkstücken (2,102) aus Holz, Holzwerkstoffen, Kunststoff oder dergleichen,
- mit einem Vorrichtungsgestell (3,103) mit einer verfahrbaren Werkstückhalterung (5,105), mittels welcher ein Werkstück (2,102), verfahrbar gehalten und an einem Werkzeug (13) vorbeifahrbar ist, um das Werkstück (2,102) mittels des Werkzeugs (13) zu bearbeiten,
- mit einer Führungsvorrichtung (11,111) mit einem an der Führungsvorrichtung (11,111) verlagerbar angeordneten Werkzeugschlitten (12) mit zumindest einem daran angeordneten Werkzeug (13), so dass das Werkzeug (13) verlagerbar angeordnet ist,
- mit einer verlagerbaren Werkstückzuführvorrichtung (7,107), mittels welcher das Werkstück (2,102) der Werkstückhalterung (5,105) zuführbar ist,
**dadurch gekennzeichnet, dass**
an der Werkstückhalterung (5,105), an der Führungsvorrichtung (11,111) und/oder an der Werkstückzuführvorrichtung (7,107) zumindest ein Zusatzaggregat (16,116,216) zur Bearbeitung des Werkstücks (2,102) angeordnet ist, wobei
- zumindest ein Zusatzaggregat (16,116,216,316) an der verlagerbaren Werkstückhalterung (5,105) angeordnet ist und mit der Werkstückhalterung verlagerbar ist und /oder
- zumindest ein Zusatzaggregat (16,116,216,316) an der verlagerbaren Werkstückzuführvorrichtung (7,107) angeordnet ist und mit der Werkstückzuführvorrichtung verlagerbar ist und/oder
- zumindest ein Zusatzaggregat (16,116,216,316) an der feststehenden Führungsvorrichtung (11,111) lagefest angeordnet ist.

2. Bearbeitungsvorrichtung nach Anspruch 1, **dadurch gekennzeichnet, dass** an dem Vorrichtungsgestell (3,103) zumindest ein Zusatzaggregat (16,116,216) zur Bearbeitung des Werkstücks (2,102) angeordnet ist.

3. Bearbeitungsvorrichtung nach Anspruch 1 oder 2, **dadurch gekennzeichnet, dass** weiterhin eine Einlauf- und/oder Auslaufvorrichtung (320) vorgesehen ist, mittels welcher das Werkstück (102) zur Bearbeitungsvorrichtung (301) hin oder von der Bearbeitungsvorrichtung (301) weg transportiert wird, wobei an der Einlauf- und/oder Auslaufvorrichtung (320) ein Zusatzaggregat (316) angeordnet ist.

4. Bearbeitungsvorrichtung nach einem der vorhergehenden Ansprüche, **dadurch gekennzeichnet, dass** ein Zusatzaggregat (16,116,216,316) ein Bohraggregat, ein Fräsaggregat, ein Sägeaggregat, ein Beschriftungsaggregat, ein Markierungsaggregat, ein Dübelsetzaggregat, ein Hakensetzaggregat und/oder ein Einbringaggregat zum Einbringen von Teilen ist.

5. Verfahren zur Bearbeitung von Werkstücken mit einer Bearbeitungsvorrichtung (1,101,201,301), insbesondere Werkstücke (2,102) aus Holz, Holzwerkstoffen, Kunststoff oder dergleichen, mit einem Vorrichtungsgestell mit einer verfahrbaren Werkstückhalterung, mittels welcher ein Werkstück verfahren werden kann und an einem Werkzeug vorbeigeführt werden kann, um das Werkstück mittels des Werkzeugs zu bearbeiten, mit einer Führungsvorrichtung mit einem an der Führungsvorrichtung verlagerbar angeordneten Werkzeugschlitten mit zumindest einem daran angeordneten Werkzeug, so dass das Werkzeug verlagert werden kann, mit einer verlagerbaren Werkstückzuführvorrichtung, mittels welcher das Werkstück der Werkstückhalterung zugeführt werden kann, wobei an der Werkstückhalterung, an der Führungsvorrichtung und/oder an der Werkstückzuführvorrichtung zumindest ein Zusatzaggregat zur Bearbeitung des Werkstücks angeordnet ist, wobei
- zumindest ein Zusatzaggregat (16,116,216,316) an der verlagerbaren Werkstückhalterung (5,105) angeordnet ist und mit der Werkstückhalterung verlagerbar ist und /oder
- zumindest ein Zusatzaggregat (16,116,216,316) an der verlagerbaren Werkstückzuführvorrichtung (7,107) angeordnet ist und mit der Werkstückzuführvorrichtung verlagerbar ist und/oder
- zumindest ein Zusatzaggregat (16,116,216,316) an der feststehenden Führungsvorrichtung (11,111) lagefest angeordnet ist,
wobei das Werkstück mittels der Werkstückhalterung oder mit der Werkstückzuführvorrichtung hin zu einem der Zusatzaggregate (16,116,216,316) verfahren wird, um damit das Werkstück zu bearbeiten oder das Werkstück in der Werkstückhalterung oder in der Werkstückzuführvorrichtung gehalten ist und entsprechend die Werkstückzuführvorrichtung oder die Werkstückhalterung zu dem Werkstück verfahren wird, um das Werkstück zu bearbeiten.

6. Verfahren nach Anspruch 5, **dadurch gekennzeichnet, dass** weiterhin auch an dem Vorrichtungsgestell zumindest ein Zusatzaggregat zur Bearbeitung des Werkstücks angeordnet ist, wobei das Werkstück mittels der Werkstückhalterung oder mit der Werkstückzuführvorrichtung hin zu dem Zusatzaggregat verfahren wird, um damit das Werkstück zu bearbeiten oder das Werkstück in der Werkstückhalterung oder in der Werkstückzuführvorrichtung gehalten ist und entsprechend die Werkstückzuführvorrichtung oder die Werkstückhalterung zu dem Werkstück verfahren wird, um das Werkstück zu bearbeiten.

7. Verfahren nach Anspruch 5 oder 6, **dadurch gekennzeichnet, dass** weiterhin eine Einlauf- und/oder Auslaufvorrichtung vorgesehen ist, mittels welcher das Werkstück von der Bearbeitungsvorrichtung weg transportiert wird, wobei an der Auslaufvorrichtung ein Zusatzaggregat (16,116,216,316) angeordnet ist, wobei das Werkstück mittels der verlagerbaren Werkstückhalterung oder mit der verlagerbaren Werkstückzuführvorrichtung hin zu dem Zusatzaggregat verfahren wird, um damit das Werkstück zu bearbeiten.

8. Verfahren nach Anspruch 5, 6 oder 7, **dadurch gekennzeichnet, dass** ein Zusatzaggregat (16,116,216,316) ein Bohraggregat ist zum Bohren einer Bohrung in das Werkstück oder dass ein Zusatzaggregat ein Fräsaggregat ist zum Fräsen des Werkstücks oder dass ein Zusatzaggregat ein Sägeaggregat ist zum Erzeugen eines Sägeschnitts oder dass ein Zusatzaggregat ein Beschriftungsaggregat ist zur Erzeugung einer Beschriftung auf dem Werkstück oder dass ein Zusatzaggregat ein Markierungsaggregat ist zur Erzeugung einer Markierung auf dem Werkstück oder dass das Zusatzaggregat ein Einbringaggregat zum Einbringen von Teilen ist, wie insbesondere ein Dübelsetzaggregat ist, zum Einsetzen eines Dübels in das Werkstück oder ein Hakensetzaggregat ist, zum Einsetzen eines Hakens in das Werkstück.

## Claims

1. A processing device (1, 101, 201, 301), in particular for processing workpieces (2, 102) made of wood, wood materials, plastic or the like,
- with a device stand (3, 103) with a movable workpiece holder (5, 105) by means of which a workpiece (2, 102) is held movable and can be moved past a tool (13) in order to process the workpiece (2, 102) by means of the tool (13),
- with a guiding device (11, 111) with a tool slide (12), which is arranged on the guiding device (11, 111) in a shiftable manner, with at least one tool (13) arranged thereon so that the tool (13) is arranged in a shiftable manner,
- with a shiftable workpiece supply device (7, 107) by means of which the workpiece (2, 102) can be supplied to the workpiece holder (5, 105),
**characterised in that**
at least one additional aggregate (16, 116, 216) for the processing of the workpiece (2, 102) is arranged on the workpiece holder (5, 105), on the guiding device (11, 111) and/or on the workpiece supply device (7, 107), wherein
- at least one additional aggregate (16, 116, 216, 316) is arranged on the shiftable workpiece holder (5, 105) and can be shifted with the workpiece holder and/or
- at least one additional aggregate (16, 116, 216, 316) is arranged on the shiftable workpiece supply device (7, 107) and can be shifted with the workpiece supply device and/or
- at least one additional aggregate (16, 116, 216, 316) is arranged on the fixed guiding device (11, 111) in a fixed manner.

2. The processing device according to claim 1, **characterised in that** at least one additional aggregate (16, 116, 216) for the processing of the workpiece (2, 102) is arranged on the device stand (3, 103).

3. The processing device according to claim 1 or 2, **characterised in that** further an inlet and/or outlet device (320) is provided by means of which the workpiece (102) is transported to the processing device (301) or away from the processing device (301), wherein an additional aggregate (316) is arranged on the inlet and/or outlet device (320).

4. The processing device according to one of the preceding claims, **characterised in that** an additional aggregate (16, 116, 216, 316) is a drilling aggregate, a milling aggregate, a sawing aggregate, a labelling aggregate, a marking aggregate, a dowel placing aggregate, a hook placing aggregate and/or an introduction aggregate for the introduction of parts.

5. A method for the processing of workpieces with a processing device (1, 101, 201, 301), in particular workpieces (2, 102) made of wood, wood materials, plastic or the like, with a device stand with a movable workpiece holder by means of which a workpiece can be moved and can be guided past a tool in order to process the workpiece by means of the tool, with a guiding device with a tool slide, which is arranged on the guiding device in a shiftable manner, with at least one tool arranged thereon so that the tool can be shifted, with a shiftable workpiece supply device by means of which the workpiece can be supplied to the workpiece holder, wherein at least one additional aggregate for the processing of the workpiece is arranged on the workpiece holder, on the guiding device and/or on the workpiece supply device, wherein
- at least one additional aggregate (16, 116, 216, 316) is arranged on the shiftable workpiece holder (5, 105) and can be shifted with the workpiece holder and/or
- at least one additional aggregate (16, 116, 216, 316) is arranged on the shiftable workpiece supply device (7, 107) and can be shifted with the workpiece supply device and/or
- at least one additional aggregate (16, 116, 216, 316) is arranged on the fixed guiding device (11, 111) in a fixed manner,
wherein the workpiece is moved to one of the additional aggregates (16, 116, 216, 316) by means of the workpiece holder or with the workpiece supply device in order to process the workpiece therewith or the workpiece is held in the workpiece holder or in the workpiece supply device and correspondingly, the workpiece supply device or the workpiece holder is moved to the workpiece in order to process the workpiece.

6. The method according to claim 5, **characterised in that** further at least one additional aggregate for the processing of the workpiece is arranged on the device stand as well, wherein the workpiece is moved to the additional aggregate by means of the workpiece holder or with the workpiece supply device in order to process the workpiece therewith or the workpiece is held in the workpiece holder or in the workpiece supply device and correspondingly, the workpiece supply device or the workpiece holder is moved to the workpiece in order to process the workpiece.

7. The method according to claim 5 or 6, **characterised in that** further an inlet and/or outlet device is provided by means of which the workpiece is transported away from the processing device, wherein an additional aggregate (16, 116, 216, 316) is arranged on the outlet device, wherein the workpiece is moved to the additional aggregate by means of the shiftable workpiece holder or with the shiftable workpiece supply device in order to process the workpiece therewith.

8. The method according to claim 5, 6 or 7, **characterised in that** an additional aggregate (16, 116, 216, 316) is a drilling aggregate for drilling a bore into the workpiece or that an additional aggregate is a milling aggregate for milling the workpiece or that an additional aggregate is a sawing aggregate for producing a saw cut or that an additional aggregate is a labelling aggregate for producing a label on the workpiece or that an additional aggregate is a marking aggregate for producing a mark on the workpiece or that an additional aggregate is an introduction aggregate for the introduction of parts, such as in particular a dowel placing aggregate for the introduction of a dowel into the workpiece or a hook placing aggregate for the introduction of a hook into the workpiece.

## Revendications

1. Dispositif d'usinage (1, 101, 201, 301), en particulier pour l'usinage de pièces (2, 102) en bois, de pièces se composant de matériaux à base de bois, de matière plastique ou de matériaux similaires, ledit dispositif d'usinage comprenant :
- un bâti de dispositif (3, 103) comportant un porte-pièce déplaçable (5, 105) au moyen duquel une pièce (2, 102) est tenue en pouvant être déplacée et en pouvant passer devant un outil (13), de façon à usiner la pièce (2, 102) au moyen de l'outil (13),
- un dispositif de guidage (11, 111) comportant un chariot porte-outil (12) disposé en pouvant être déplacé sur le dispositif de guidage (11, 111), ledit chariot porte-outil ayant au moins un outil (13) disposé sur celui-ci, de sorte que l'outil (13) est disposé en étant déplaçable,
- un dispositif d'amenée de pièces déplaçable (7, 107), dispositif au moyen duquel la pièce (2, 102) peut être amenée jusqu'au porte-pièce (5, 105),
**caractérisé**
**en ce qu'**au moins une unité supplémentaire (16, 116, 216) servant à l'usinage de la pièce (2, 102) est disposée sur le porte-pièce (5, 105), sur le dispositif de guidage (11, 111) et / ou sur le dispositif d'amenée de pièces (7, 107), où
- au moins une unité supplémentaire (16, 116, 216, 316) est disposée sur le porte-pièce déplaçable (5, 105) et peut être déplacée avec le porte-pièce et / ou
- au moins une unité supplémentaire (16, 116, 216, 316) est disposée sur le dispositif d'amenée de pièces déplaçable (7, 107) et peut être déplacée avec le dispositif d'amenée de pièces et / ou
- au moins une unité supplémentaire (16, 116, 216, 316) est disposée en position fixe sur le dispositif de guidage fixe (11, 111).

2. Dispositif d'usinage selon la revendication 1, **caractérisé en ce qu'**au moins une unité supplémentaire (16, 116, 216) servant à l'usinage de la pièce (2, 102) est disposée sur le bâti de dispositif (3, 103).

3. Dispositif d'usinage selon la revendication 1 ou 2, **caractérisé en ce qu'**il est prévu en outre un dispositif d'entrée et / ou de sortie (320), dispositif au moyen duquel la pièce (102) est transportée en se rapprochant du dispositif d'usinage (301) ou bien en s'éloignant du dispositif d'usinage (301), où une unité supplémentaire (316) est disposée sur le dispositif d'entrée et / ou de sortie (320).

4. Dispositif d'usinage selon l'une quelconque des revendications précédentes, **caractérisé en ce qu'**une unité supplémentaire (16, 116, 216, 316) est une unité de perçage, une unité de fraisage, une unité de sciage, une unité d'étiquetage, une unité de marquage, une unité d'insertion de chevilles, une unité d'insertion de crochets et / ou une unité de mise en place servant à la mise en place de pièces.

5. Procédé d'usinage de pièces avec un dispositif d'usinage (1, 101, 201, 301), en particulier usinage de pièces (2, 102) en bois, de pièces se composant de matériaux à base de bois, de matière plastique ou de matériaux similaires, ledit dispositif d'usinage comprenant un bâti de dispositif comportant un porte-pièce déplaçable au moyen duquel une pièce peut être déplacée et peut être guidée en passant devant un outil, de façon à usiner la pièce au moyen de l'outil, comprenant un dispositif de guidage comportant un chariot porte-outil disposé en étant déplaçable sur le dispositif de guidage, ledit chariot porte-outil ayant au moins un outil disposé sur celui-ci, de sorte que l'outil peut être déplacé, ledit dispositif d'usinage comprenant un dispositif d'amenée de pièces déplaçable, dispositif au moyen duquel la pièce peut être amenée jusqu'au porte-pièce, où au moins une unité supplémentaire servant à l'usinage de la pièce est disposée sur le porte-pièce, sur le dispositif de guidage et / ou sur le dispositif d'amenée de pièces, où
- au moins une unité supplémentaire (16, 116, 216, 316) est disposée sur le porte-pièce déplaçable (5, 105) et peut être déplacée avec le porte-pièce et / ou
- au moins une unité supplémentaire (16, 116, 216, 316) est disposée sur le dispositif d'amenée de pièces déplaçable (7, 107) et peut être déplacée avec le dispositif d'amenée de pièces et / ou
- au moins une unité supplémentaire (16, 116, 216, 316) est disposée en position fixe sur le dispositif de guidage fixe (11, 111),
où la pièce est déplacée au moyen du porte-pièce ou bien avec le dispositif d'amenée de pièces vers l'une des unités supplémentaires (16, 116, 216, 316), de façon à usiner la pièce avec l'une desdites unités supplémentaires, ou bien la pièce est tenue dans le porte-pièce ou dans le dispositif d'amenée de pièces et, en conséquence, le dispositif d'amenée de pièces ou le porte-pièce est déplacé jusqu'à la pièce, pour usiner la pièce.

6. Procédé selon la revendication 5, **caractérisé en ce qu'**au moins une unité supplémentaire servant à l'usinage de la pièce est disposée en outre, elle aussi, sur le bâti de dispositif, où la pièce, au moyen du porte-pièce ou bien avec le dispositif d'amenée de pièces, est déplacée vers l'unité supplémentaire, pour usiner la pièce avec celle-ci, ou bien la pièce est tenue dans le porte-pièce ou dans le dispositif d'amenée de pièces et, en conséquence, le dispositif d'amenée de pièces ou le porte-pièce est déplacé jusqu'à la pièce, pour usiner la pièce.

7. Procédé selon la revendication 5 ou 6, **caractérisé en ce qu'**il est prévu en outre un dispositif d'entrée et / ou de sortie, dispositif au moyen duquel la pièce est transportée en s'éloignant du dispositif d'usinage, où une unité supplémentaire (16, 116, 216, 316) est disposée sur le dispositif de sortie, où la pièce, au moyen du porte-pièce déplaçable ou bien avec le dispositif d'amenée de pièces déplaçable, est déplacée vers l'unité supplémentaire, pour usiner la pièce avec celle-ci.

8. Procédé selon la revendication 5, 6 ou 7, **caractérisé en ce qu'**une unité supplémentaire (16, 116, 216, 316) est une unité de perçage servant au perçage d'un trou dans la pièce, ou bien **en ce qu'**une unité supplémentaire est une unité de fraisage servant au fraisage de la pièce, ou bien **en ce qu'**une unité supplémentaire est une unité de sciage servant à la production d'une découpe à la scie, ou bien **en ce qu'**une unité supplémentaire est une unité d'étiquetage servant à la production d'une étiquette sur la pièce, ou bien **en ce qu'**une unité supplémentaire est une unité de marquage servant à la production d'un marquage sur la pièce, ou bien **en ce que** l'unité supplémentaire est une unité de mise en place servant à la mise en place de pièces, ladite unité supplémentaire étant en particulier une unité d'insertion de chevilles servant à l'insertion d'une cheville dans la pièce, ou bien une unité d'insertion de crochets servant à l'insertion d'un crochet dans la pièce.
